(19) Europäisches Patentamt
European Patent Office
Office européen des brevets

(11) Publication number: **0 206 409 B1**

# EUROPEAN PATENT SPECIFICATION

(45) Date of publication of patent specification: **18.12.91**   (51) Int. Cl.⁵: **H04J 3/04**, H04J 3/06

(21) Application number: **86201034.5**

(22) Date of filing: **16.06.86**

(54) **Higher order digital transmission system including a multiplexer and a demultiplexer.**

(30) Priority: **17.06.85 NL 8501738**

(43) Date of publication of application:
**30.12.86 Bulletin 86/52**

(45) Publication of the grant of the patent:
**18.12.91 Bulletin 91/51**

(84) Designated Contracting States:
**DE FR GB SE**

(56) References cited:
**EP-A- 0 040 351**
**EP-A- 0 088 432**

**ELECTRICAL COMMUNICATION, vol. 57, no. 3, 1982, pages 251-258, Heidenheim, DE; A. BARBETTA et al.: "Digital multiplexers for rates from 2 to 565 Mbits-1**

**NACHRICHTENTECHNISCHE ZEITSCHRIFT NTZ, vol. 36, no. 1, January 1983, pages 16-21, Berlijn, DE; H. HOFMEISTER: "Digitaler multiplexer für vier plesiochrone 140-Mbit/s-Digitalsignale"**

**IEE PROCEEDINGS, vol. 132, Pts. E and I, no. 2, March/April 1985, pages 68-72, Old Woking, Surrey, GB; I.C. WOOD et al.: "Design**

**techniques for a 565/680 Mbit/s coder/decoder"**

**CCITT Livre Jaune, Tôme III - Fascicule III 3. Réseaux numériques. Systèmes de transmission et équipement de multiplexage Avis G701-G941, VII Assemblée Plénière 10th-21st November 1980, Genève, CH**

**IEEE JOURNAL OF SOLID-STATE CIRCUITS, vol. SC-14, no. 5, October 1979, pages 812-817, New York, US; J.B. HUGHES et al.: "A versatile ECL multiplexer IC for the Gbit/s range"**

(73) Proprietor: **N.V. Philips' Gloeilampenfabrieken Groenewoudseweg 1
NL-5621 BA Eindhoven(NL)**

(72) Inventor: **Buchner, Johannes Bertold
INT. OCTROOIBUREAU B.V. Prof. Holstlaan 6
NL-5656 AA Eindhoven(NL)**

(74) Representative: **Bakker, Hendrik et al
INTERNATIONAAL OCTROOIBUREAU B.V.
Prof. Holstlaan 6
NL-5656 AA Eindhoven(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a higher order digital transmission system including a digital multiplexer having N parallel inputs, and a digital demultiplexer having N parallel outputs for transmitting mutually synchronized digital signal streams through a common digital path between said multiplexer and demultiplexer, where N ≥ 2 and the multiplexer being arranged for cyclically and symbol-sequential interleaving the digital signal streams to form a composite digital signal stream, the transmission system further including at least one block encoding arrangement and at least one block decoding arrangement, and a phase comparator arrangement, the digital signal streams being entered synchronously under the control of a common clock signal into the encoding arrangement and being applied to the N parallel inputs of the multiplexer via the block encoding arrangement, the parallel ouputs of the demultiplexer being connected to the inputs of the block encoding arrangement, the signals applied to the parallel outputs of the demultiplexer being entered into the block decoding arrangement under the control of the clock signal recovered from the composite digital signal, the outputs of the block decoding arrangement being each connected to a signal output of the transmission system, and in the phase comparator arrangement synchronizing characteristics of the digital signal streams being compared with each other, whereafter as a function of the phase differences measured between said synchronizing characteristics the phase of the read clock is controlled such that thereafter the block decoding arrangements display the synchronizing characteristics with the mutual phase differences produced at the transmitter end

Such a transmission sytem is known from EP-A-0088432.

In a digital multiplexer, N incoming signal streams (tributaries) are combined to form one outgoing signal stream, whilst the opposite operation occurs in the demultiplexer. Multiplexing the incoming signal streams is effected by means of interleaving, which implies that a bit from a binary signal stream 1 is followed by a bit from a binary signal stream 2 etc. The resultant outgoing signal stream has a digital rate which is higher than or equal to N times the digital rate of the N incoming signal streams. This is caused by the fact that the outgoing signal stream requires its own frame word and a few service bits, which are added to the outgoing signal stream. Provisions are also taken to compensate for frequency differences between the tributary signal streams and the multiplex clock. This is necessary since each of the tributary signals has its own free-running clock frequency. To this end, idle bits are injected into the multiplex signal, together with control bits, which indicate the status of the idle bits. This process is called positive justification and in general is the simplest manner of multiplexing pleisiochronous signal streams.

When digital signals are conveyed over long distances it is customary to use a form of encoding in the transmitter portion and a form of decoding in the receiver portion of the transmission system, such that the digital signal is adapted to the digital path. This digital path may, for example, be constituted by symmetrical or coaxial cables, optical fibres or the air. One of the objects usually is the suppression of the direct current component, which permits of the use of alternating current couplings in the transmission system, and direct current supply of the regenerators from the transmission system via the transmission cable being possible. Another object often is to increase the pulse density of the digital signal to be conveyed, or to ensure a minimum pulse density such that recovering a clock signal, required in regenerative circuits, is possible.

In a blocking coding arrangement use is made of what are commonly referred to as code translation Tables, such as the Tables described in, for example, Philips Telecommunication Review, vol. 34, no. 2, June 1976, pages 72-86. A series/parallel converter which divides the bit stream applied to its input in consecutive blocks of a predetermined number of bits n is provided at the input of the encoding arrangement. A block of n bits is thereafter converted with the aid of the translation code matrix into a new block of m symbols in accordance with a specific instruction. Blocks of m symbols are reconverted at the output of the encoding arrangement with the aid of a parallel/series converter into a bit stream which is conveyed to the receiver portion of the digital transmission system via the digital path (cable, optical fibre). In the receiver portion of the system, the bit stream applied there is subjected to a reverse process with the aid of the decoding arrangement. Examples of an encoding arrangement and a de-coding arrangement are described in, for example, Proceedings 17th International Scientific Congress on Electronics, Rome, 16-18 March 1970, pages 275-283.

A higher order digital multiplex system of the above-defined type is disclosed in, for example, C.C.I.T.T. Recommendation G922. In this disclosure the frame structure of a multiplex system having 4 tributary signal streams of 140 Mbit/s each is described. A frame has a length of 2688 bits and comprises: a 12-bit frame synchronizing word; 4 service bits; 4 5-bit justification control words, one for each tributary signal stream; 4 justifiable bits, one for each tributary signal stream and 2648 time slots for the information from the four tributary signal streams. The block encoding arrangement is arranged subsequent to the multiplexer and the block decoding arrangement precedes the demultiplexer. This results in it being necessary that both the block encoding arrangement and the block decoding arrangement must be operated at the full line rate. When this line rate increases to above 565 Mbit/s, realizing the encoding and decoding arrangements becomes problematical, as low-dissipation digital modules are required. In the present state of the art of the industrial integration processes it is not possible to realize these modules, or it is very difficult to do so. Consequently, it is very difficult to apply in a higher order digital transmission system the same design philosophies customary for a lower order digital transmission system.

In the transmission system according to EP-A-0088432 the digital signal streams are, after these signal streams are synchronized by forming out of each signal stream a number of consecutive frames having a predetermined structure, applied in parallel to the 6 inputs of a 6B/8B block encoding arrangment and each set of 6 parallel inputs bits is converted into 8 parallel output bits, which in parallel are applied to the 8 inputs of the multiplexer. At the receiver side the composite digital signal stream first is applied to the 8 inputs of an 8B/6B block decoding arrangement, at the 6 outputs of which the orignally transmitted digital signal streams are available again. In this prior art the phase comparator arrangement compares the frame synchronization characteristics, which are present in the received composite digital signal stream, with each other and controls the read clock of the multiplexer to obtain phase synchronization in the output signals of the decoding arrangment.

The system according to this publication does not have the problem that the block encoding arrangements have to operate at the full line rate. However this known system has the disadvantage that at the input side the digital signal streams have to be converted into consecutive frames having a predetermined structure, which requires a relatively complex synchronizing circuit for each of the input signals, while to obtain the required phase synchronization at the receiver end also a relatively complex circuit comprising a frame pattern detection circuit, a frame synchronizing circuit and a local frame generator are required, which circuits all have to operate at the full line rate. A further disadvantage of obtaining phase synchronization by comparing the phases of the consecutive frames, is that it can take quite a long time before the correct phase is obtained. The invention has for its object to provide a higher order digital transmission system which solves also the problems that are still present in the system according to EP-A-0088432.

The invention therefor provides a digital transmission system of the above mentioned kind characterized in that N mutually synchronized digital signal streams, are applied to the N parallel inputs of the multiplexer via N block encoding arrangements, in that the digital signal streams, in the respective block encoding arrangements, are provided with a word synchronization characteristic, that the N parallel outputs of the demultiplexer are entered into N block decoding arrangements and in that the outputs of the N block encoding arrangement are coupled to the input of the phase comparator, which is arranged to compare the word synchronizing characteristcs of the digital signal streams at the respective outputs of the block decoding arrangements.

The invention, and its advantages will now be described in greater detail by way of example with reference to the accompanying drawings.

Figure 1 shows a higher order digital transmission system according to the invention;

Figure 2 shows a time-sequence diagram of the multiplexer;

Figure 3 shows time-sequence diagrams of the four possible phase positions of the demultiplexer;

Figure 4 shows a time-sequence diagram of the symbols occurring at the output of the demultiplexer.

Figure 5 shows an embodiment of a block decoding arrangement.

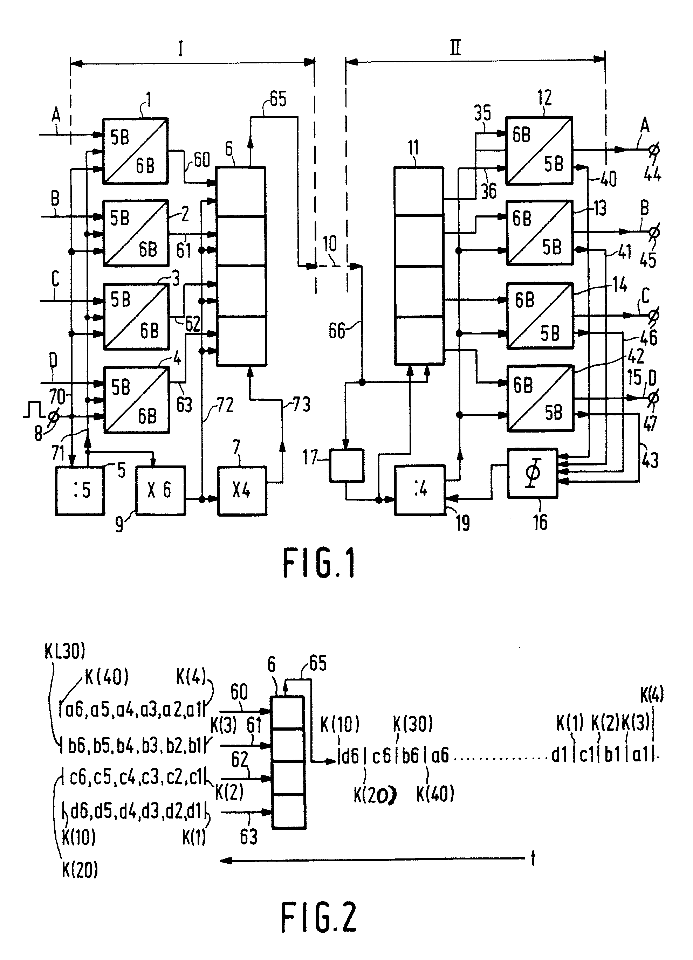

In the higher order digital transmission system shown in Figure 1, I is the transmitter portion of the system and II the receiver portion of the system. The transmitter portion I comprises the block encoding arrangements 1, 2, 3 and 4, the multiplexer 6, the divider 5 and the multipliers 7 and 9. The receiver portion II comprises the block decoding arrangements 12, 13, 14 and 15, the demultiplexer 11, the phase comparator 16, the divider 19 and the clock regenerator 17. The N mutually synchronized digital signal streams A, B, C and D are applied to the signal input of one of the respective block encoding arrangements 1 to 4. In the embodiment shown N = 4. The write clock inputs of the block encoding arrangements 1 to 4 are together connected to the clock input 8 of the transmitter portion I of the transmission system via the line 70. The clock input 8 is connected via a divide-by-5-divider and the line 71 to the clock inputs of the block encoding arrangements 1 to 4, which from the four digital signal streams A to D form 5-bit blocks, and also to the input of a multiply-by-6 multiplier 9. The output of the multiply-by-6 multiplier 9 is connected via the line 72 to the write clock inputs of the multiplexer 6 and also via a multiply-by-4 multiplier to the read clock outputs of the multiplexer 6. Each of the signal outputs 60 to 63 of the block encoding arrangements is connected to a signal input of the multiplexer 6. The signal output 65 of the multiplexer 6 is connected via a digital path 10 to the input 66 of the receiver portion II of the transmission system. The input 66 is connected to the signal input of the demultiplexer 11 and also to the input of the clock regenerator 17. The output of the clock regenerator 17 is connected to the clock input of the demultiplexer 11 and also to the input of a divide-by-4 divider 19. The output of the divider 19 is connected to the write clock inputs of the block decoding arrangements 12 to 15. The original digital signal streams A to D are again available at the outputs 44 to 47 of the block decoding arrangements 12. The outputs 40 to 43 of the block decoding arrangements 12 to 15 are each connected to an input of the phase comparator 16.

Let it be assumed that the four incoming digital signals A to D are binary signals having a symbol rate (= bit rate) of 140 Mb/s. These digital streams are entered synchronously into the 5B/6B block encoding arrangements 1 to 4 with the aid of the 140 MHz clock signal present on the line 70. In the 5B/6B block encoding arrangements the 140 Mbit/s signal streams are divided by means of the 28 MHz clock signal present on the line 71 into blocks each having a length of 5 symbols. The 5-bit blocks are thereafter translated in the block encoding arrangements into blocks of 6 symbols. The block encoding arrangements 1 to 4 produce at their respective outputs 60 to 63 digital signal streams of each 6/5 x 140 = 168 Mbaud. The four digital signal streams supplied from the outputs 60 to 63 of the block encoding arrangements 1 to 4 are entered in parallel into the multiplexer 6 with the aid of the clock signal produced by the multiplier 9 and having a frequency of 6 x 28 = 168 MHz. Using the clock signal present at the output of the multiplier 7, which signal has a digital rate of 4 x 168 = 672 MHz, the digital content of the multiplexer 6 is read serially.

In the four parallel 5B/6B block encoding arrangements, the 6B words are each provided with a word synchronizing characteristic. Since the four parallel 5B/6B block encoding arrangements 1 to 4 are controlled by the same 28 MHz clock signal and the block encoding arrangements 1 to 4 are identical, the 6B words will appear with the same phases at the outputs 60 to 63 of the block encoding arrangements. This is shown schematically in the time-sequence diagram of Figure 2. The word synchronizing characteristics K(1) ... K(4) shown symbolically by means of upright lines arrive at the same instant at the outputs 60 ... 63 of the block encoding arrangements. Consequently, the mutual difference between the synchronizing characteristics is equal to 0 degrees. With the aid of the 672 MHz clock signal present at the output of the multiplier 7 always 4 bits are arranged one after the other with the same indices. A composite digital signal of the shape shown in the time-sequence diagram of Figure 2 appears at the output 65 of the multiplexer 6.

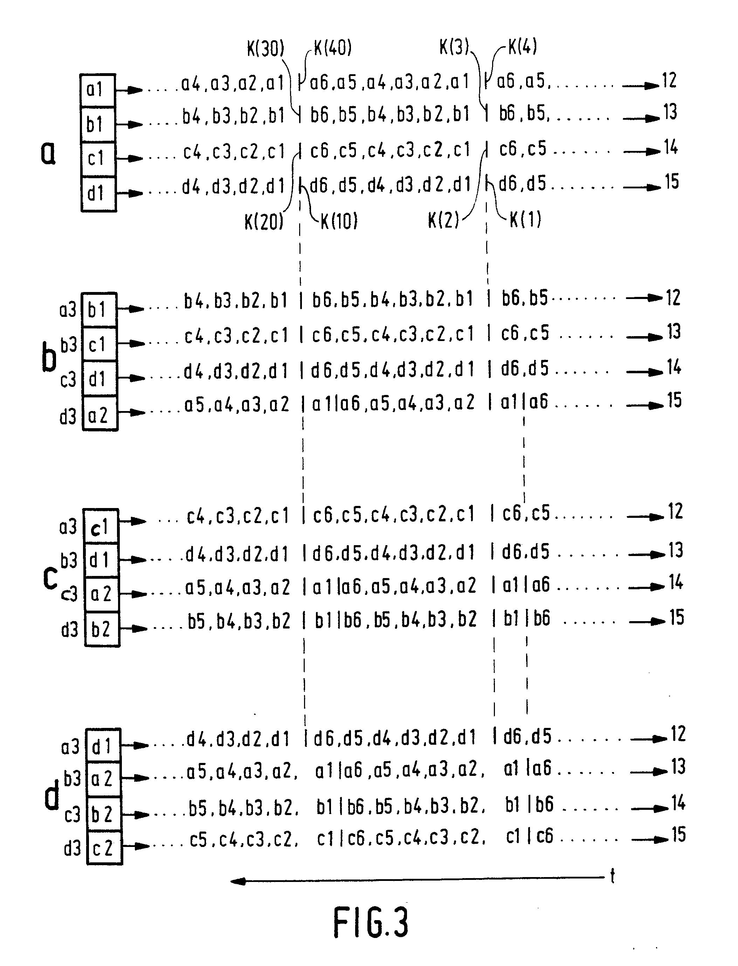

The composite digital signal is applied to the input 66 of the receiver sections II of the digital transmission system via the digital path 10. Using the clock regenerator 17, the clock signal which is used for further signal processing in the receiver portion II of the transmission system is recovered from the composite digital signal. The recovered 672 MHz clock signal is applied to the clock input of the multiplexer 11 and via a divider 19 to the clock inputs of the block decoding arrangements 12 to 15. In the demultiplexer 11 four symbols are inserted with the aid of the 672 MHz clock signal, which symbols are thereafter entered in parallel, with the aid of a clock signal having a frequency of 1/4 x 672 = 168 MHz, into the four parallel block decoding arrangements 12 to 15. Thereafter, using the 672 MHz clock signal four new symbols are inserted, which symbols are thereafter entered in parallel with the aid of the 168 MHz clock signal into the four parallel block decoding arrangements 12 to 15, etc. The four possible phase positions of the decoder write clock (168 MHz) relative to the shift clock (672 MHz) and the digital signal streams produced at the four parallel outputs of the demultiplexer are shown relative to each other in the time-sequence diagrams of Figure 3. In the time-sequence diagram of Figure 3a, the four word synchronizing characteristics K(1) ... K(4), and also the synchronizing characteristics K(10) ... K(40) are mutually in-phase. This implies that the demultiplexer 11 and demultiplexer 6 are in synchronism with each other. The respective digital input signal streams A, B, C and D of the transmission system are available again at the outputs 44 to 47 of the block encoding arrangements.

From the time-sequence diagrams shown in Figures 3b, 3c and 3d it will be obvious that the three other phase positions result in a different phase pattern in the word synchronizing characteristics K(1) ... K(4). The phase difference between the word synchronizing characteristics is not equal to 0 degrees, as it is at the transmitter side I of the transmission system. In all these three cases the demultiplexer 11 and the multiplexer 6 are not mutually in synchronism.

In the time-sequence diagram of Figure 3b the synchronizing characteristics K(1) and K(10) have a time lead relative to the other synchronising characteristics K(2) to K(4) and K(20) to K(40), respectively. In the time-sequence diagram of Figure 3c the synchronizing characteristics K(1) and K(2) lead the synchronizing characteristics K(3) and K(4).

The synchronising characteristics K(10) and K(20) likewise have a time lead relative to the characteristics K(30) and K(40). In the time-sequence diagram of Figure 3d the synchronizing characteristic K(4) has a time lag relative to the other characteristics K(1) to K(3). The characteristic K(40) likewise lags the other characteristics K(10) to K-(30).

The phase positions as shown in the Figures 3b to 3d are detected by means of the phase comparator arrangement 16, whereafter a control signal is applied to the divide-by-4 divider 15 for establishing synchronization between the multiplexer 6 and the demultiplexer 11. When the phase comparator 16 detects a phase position as shown in Figure 3a, the original digital signal streams A, B, C and D are then again available in the appropriate sequence at the outputs 44 to 47) of the block decoding arrangements 12 to 15 and no control voltage is applied to the divide-by-4 divider 19.

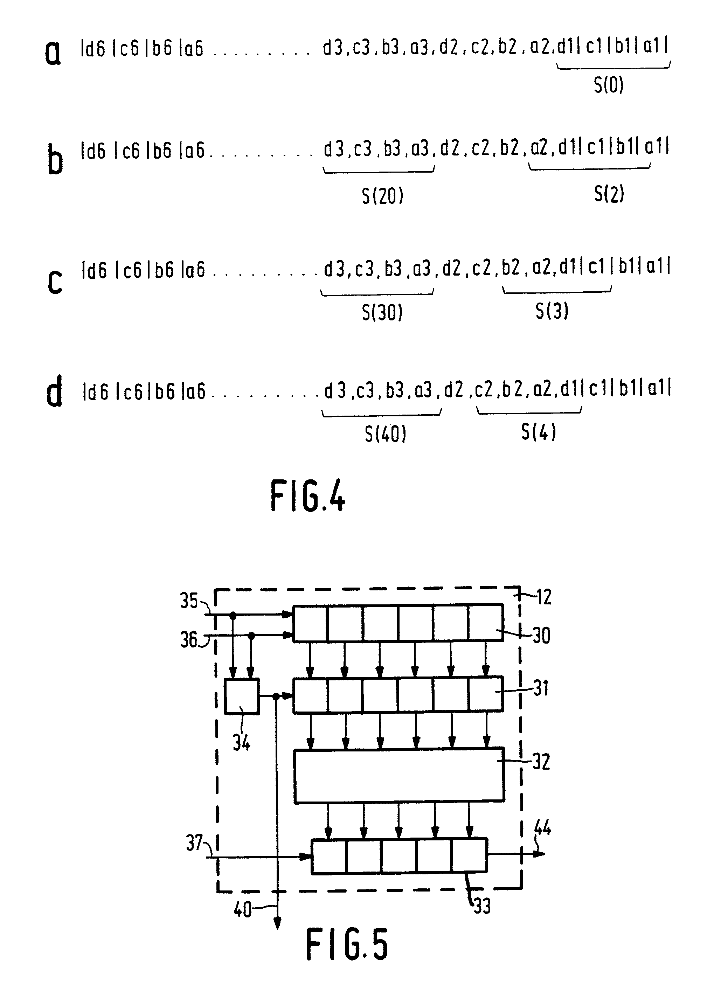

When the phase comparator 16 detects a phase position as shown in Figure 3b, the divide-by-4 divider 19 will operate once only as a divide-by-3 divider with the aid of the control signal produced by the phase comparator 16. This is shown in greater detail in Figure 4b. S(2) denotes the content of the demultiplexer 11 at the instant at which it is read in parallel. If now, in response to the control signal produced by the phase comparator 16, the divide-by-4 divider produces a write pulse once after three clock pulses which correspond to the symbols d2,c2,b2, the content of the demultiplexer 11 will be equal to S(20) after the next four clock pulses. The symbols a3, b3, c3 and d3 are now stored in the appropriate memory locations at the instant at which they are read in parallel, see Figure 3b. The demultiplexer 11 is now in synchronism with the multiplexer 6. The original digital signal streams A, B, C and D are then agains available in the appropriate sequence at the outputs 44 to 47 of the block decoding arrangements 12 to 15.

When the phase comparator detects a phase position as shown in Figure 3c, the divide-by-4 divider 19 will operate once as a divide-by-2 divider with the aid of the control signal produced by the phase comparator 16. This is shown in greater detail in Figure 4c. S(3) denotes the content of the demultiplexer 11 at the instant at which it is read in parallel. If now, with the aid of the control signal produced by the phase comparator 16 the divide-by-4 divider produces a write pulse once after two clock pulses which correspond to the symbols d2 and c2, the content of the demultiplexer 11 will be equal to S(30) after the next four clock pulses. The symbols a3, b3, c3 and d3 are now stored in the appropriate memory locations of the multiplexer 11,

at the instant at which they are read in parallel, see Figure 3c. The demultiplexer 11 is now in synchronism with the multiplexer 6. The original digital signal streams A, B, C and D are then again available in the appropriate sequence at the outputs 44 to 47 of the block decoding arrangements 12 to 15.

When the phase comparator 16 detects a phase position as shown in Figure 3d, the divide-by-4 divider 19 will operate once as a divide-by-1 divider with the aid of the control signal produced by the phase comparator 16. This is shown in greater detail in Figure 4d S(4) denotes the content of the demultiplexer 11 at the instant at which it is read in parallel. If now, with the aid of the control signal produced by the phase comparator 16 produces a write pulse once after one clock pulse which corresponds to the symbol d2, the content of the demultiplexer 11 will be equal to S(40) after the next four clock pulses. The symbols a3, b3, c3 and d3 are now stored in the appropriate memory locations of the multiplexer 11 at the instant at which they are read in parallel. The demultiplexer 11 is now in synchronism with the multiplexer 6. The original digital signal streams A, B, C and D are then again available in the appropriate sequence at the outputs 44 to 47 of the block decoding arrangements 12 to 15.

During the synchronizing phase the word synchronization in the block decoding arrangement is temporarily lost. The word synchronization is not restored until the symbols a to d, reference 6, have passed the input of the demultiplexer 11.

Because of the fact that the block coding arrangements 1 to 4 and the block decoding arrangements 12 to 15 are operated at an N times lower symbol rate it is possible to integrate said arrangements, in spite of the high line symbol rate of the transmission system. In addition the described multiplexing method renders it possible to have all the signal processing operations, such as scrambling, justifying, line-coding, error-monitoring and word synchronization effected at an N times lower symbol rate. The multiplexer 6 and the demultiplexer 11 can be realized with the aid of a simple parallel/series converter and a simple series/parallel converter. It is also not necessary to add frame words and prolonged frame synchronization techniques.

Figure 5 shows an embodiment of a block decoding arrangement. It comprises an input shift register 30, a buffer 31, a decoder unit 32, an output shift register 33 and a word synchronizer 34. With the aid of the 168 MHz clock signal present at the clock input 36 a word having 6 binary symbols is written into the series register 30 via the input 35; see, for example, Figure 3a the word $a_1...a_6$. The word synchronizer 34 produces, after detection of the synchronization characteristic K(40), a pulse in response to which the content of the series register 30 is transferred to the buffer 31. Said word synchronizing characteristic is also applied to an input of the phase comparator 16 via the line 40. Using the decoder unit 32, the word having 6 binary symbols is converted into a word having 5 binary symbols which is applied in parallel to the output register 33. This output register is read with the aid of the 140 MHz clock signal present at the clock input 37. The original digital signal stream is available again at the output 44.

## Claims

1. A higher order digital transmission system including a digital multiplexer (6) having N parallel inputs, and a digital demultiplexer (11) having N parallel outputs for transmitting mutually synchronized digital signal streams (A-D) through a common digital path (16) between said multiplexer and demultiplexer, where N ≧ 2 and the multiplexer being arranged for cyclically and symbol-sequential interleaving the digital signal streams to form a composite digital signal stream, the transmission system further including at least one block encoding arrangement (1-4) and at least one block decoding arrangement (12-18), and a phase comparator arrangement (16), the digital signal streams being entered synchronously under the control of a common clock signal into the encoding arrangement and being applied to the N parallel inputs of the multiplexer via the block encoding arrangement, the parallel ouputs of the demultiplexer being connected to the inputs of the block encoding arrangement, the signals from the parallel outputs of the demultiplexer being entered into the block decoding arrangement under the control of the clock signal recovered from the composite digital signal, the outputs of the block decoding arrangement being each connected to a signal output (44-47) of the transmission system, and in the phase comparator arrangement synchronizing characteristics of the digital signal streams being compared with each other, whereafter as a function of the phase differences measured between said synchronizing characteristics the phase of the read clock is controlled such that thereafter the block of decoding arrangements display the synchronizing characteristics with the mutual phase differences produced at the transmitter end, characterized in that N mutually synchronized digital signal streams are applied to the N parallel inputs of the multiplexer via N block encoding arrangements, in that the digital signal streams, in the respective block encoding arrangements, are provided with a word synchronization characteristic, that the N parallel outputs of the demultiplexer are entered into N block decoding arrangements and in that the outputs of the N block decoding arrangement are coupled to the input of the phase comparator, which is arranged to compare the word synchronizing characteristcs of the digital signal streams at the respective outputs of the block decoding arrangements.

## Revendications

1. Système de transmission numérique d'ordre supérieur comprenant un multiplexeur numérique (6) comportant N entrées parallèles et un démultiplexeur numérique (11) comprenant N sorties parallèles pour transmettre des trains de signaux numériques mutuellement synchronisés (A-D) par un trajet numérique commun (16) entre le multiplexeur et le démultiplexeur, où N ≧ 2 et le multiplexeur est conçu pour imbriquer les trains de signaux numériques cycliquement et séquentiellement pour les symboles afin de former un train de signaux numériques composite, le système de transmission comprenant, en outre, au moins un dispositif de codage en blocs (1-4) et au moins un dispositif de décodage en blocs (12-18) et un dispositif comparateur de phase (16), les trains de signaux numériques étant introduits de manière synchrone, sous la commande d'un signal d'horloge commun, dans le dispositif de codage et étant appliqués aux N entrées parallèles du multiplexeur par l'intermédiaire du dispositif de codage en blocs, les sorties parallèles du démultiplexeur étant connectées aux entrées du dispositif de codage en blocs, les signaux des sorties parallèles du démultiplexeur étant introduits dans le dispositif de décodage en blocs sous la commande du signal d'horloge récupéré du signal numérique composite, les sorties du dispositif de décodage en blocs étant connectées chacune à une sortie de signal (44-47) du système de transmission et les caractéristiques de synchronisation des trains de signaux numériques étant comparées l'une à l'autre dans le dispositif comparateur de phase, après quoi, en fonction des différences de phase mesurées entre les caractéristiques de synchronisation, la phase de l'horloge de lecture est réglée de telle façon que par la suite les dispositifs de décodage en blocs affichent les caractéristiques de synchronisation avec les différences de phase mutuelles produites à l'extrémité d'émetteur, caractérisé en ce que N trains de signaux numériques mutuellement synchronisés sont appliqués aux N entrées parallèles du multiplexeur par l'intermédiaire de N dispositifs de codage en blocs, en ce que les trains de signaux numériques, dans les dispositifs de codage en blocs respectifs, sont pourvus d'une caractéristique de synchronisation de mot, que les N sorties parallèles du démultiplexeur sont introduites dans N dispositifs de décodage en blocs et en ce que les sorties des N dispositifs de décodage en blocs sont couplées à l'entrée du comparateur de phase qui est prévu pour comparer les caractéristiques de synchronisation de mot des trains de signaux numériques aux sorties respectives des dispositifs de décodage en blocs.

## Patentansprüche

1. Digitales Übertragungssystem höherer Ordnung mit einem digitalen Multiplexer (6) mit N parallelen Eingängen, und einem digitalen Demultiplexer (11) mit N parallelen Ausgängen zum Übertragen zueinander synchronisierter digitaler Signalströme (A-D) über eine gemeinsame digitale Strecke (10) zwischen dem genannten Multiplexer und Demultiplexer, wobei N ≧ 2 ist und wobei der Multiplexer zum zyklischen und symbolsequentiellen Verschachteln der digitalen Signströme zu einem einzigen zusammengestellten Signalstrom eingerichtet ist, wobei das Übertragungssystem weiterhin mindestens eine Blockkodieranordnung (1-4) und mindestens eine Blockdekodieranordnung (12-18), sowie eine Phasenvergleichsanordnung (16) aufweist, wobei die digitalen Signalströme unter Ansteuerung eines gemeinsamen Taktimpulssignals synchron in die Kodieranordnung eingeführt und über die Blockkodieranordnung den N parallelen Eingängen des Multiplexers zugeführt werden, wobei die parallelen Ausgänge des Demultiplexers mit den Eingängen der Blockdekodieranordnung verbunden sind, wobei die an den parallelen Ausgängen des Demultiplexers auftretenden Signale unter Ansteuerung des aus dem zusammengestellten digitalen Signal gewonnenen Taktimpulssignals in die Blockdekodieranordnung eingeführt werden, wobei die Ausgänge der Blockdekodieranordnung mit je einem Signalausgang (44-47) des Übertragungssystems gekoppelt sind und wobei in der Phasenvergleichsanordnung Synchronisierkennzeichen der digitalen Signalströme miteinander verglichen werden, wonach als Funktion der zwischen den genannten Synchronisierkennzeichen gemessenen Differenzen die Phase des Einlesetaktimpulses derart gesteuert wird, daß danach die Blockdekodieranordnungen die Synchronisierkennzeichen mit der Sendeseite verursachten gegenseitigen Phasenunterschieden wiedergeben, dadurch gekennzeichnet, daß N zueinander synchronisierte digitale Signalströme über N Blockkodieranordnungen den N parallelen Eingängen des Multiplexers zugeführt werden, daß die digitalen Signalströme in den betreffenden Blockkodieranordnungen mit einem Wortsynchronisierkennzeichen versehen werden, daß N parallele Ausgangssignale des Demultiplexers in N Blockdekodieranordnungen eingeführt werden, daß die Ausgänge der N Blockdekodieranordnungen mit dem Eingang der Phasenvergleichsanordnung gekoppelt werden, die dazu vorgesehen ist, die Wortsynchronisierkennzeichen der digitalen Signalströme an den betreffenden Ausgängen der Blockdekodieranordnungen miteinander zu vergleichen.

**FIG.1**

**FIG.2**

K(30) K(40) K(3) K(4)

**a**

```
a1 →  ....a4,a3,a2,a1 ⎱a6,a5,a4,a3,a2,a1 ⎱a6,a5,.......  ──→ 12
b1 →  ....b4,b3,b2,b1 ⎱ b6,b5,b4,b3,b2,b1 ⎱ b6,b5,......  ──→ 13
c1 →  ....c4,c3,c2,c1 ⎱ c6,c5,c4,c3,c2,c1 ⎱ c6,c5.....  ──→ 14
d1 →  ....d4,d3,d2,d1 ⎱d6,d5,d4,d3,d2,d1 ⎱ d6,d5.......  ──→ 15
```

K(20) K(10) K(2) K(1)

**b**

```
a3  b1 →  ....b4,b3,b2,b1 | b6,b5,b4,b3,b2,b1 | b6,b5········  ──→ 12
b3  c1 →  ....c4,c3,c2,c1 | c6,c5,c4,c3,c2,c1 | c6,c5 .....  ──→ 13
c3  d1 →  ....d4,d3,d2,d1 | d6,d5,d4,d3,d2,d1 | d6,d5......  ──→ 14
d3  a2 →  ....a5,a4,a3,a2 | a1|a6,a5,a4,a3,a2 | a1|a6......  ──→ 15
```

**c**

```
a3  c1 →  ...c4,c3,c2,c1 | c6,c5,c4,c3,c2,c1 | c6,c5.......  ──→ 12
b3  d1 →  ....d4,d3,d2,d1 | d6,d5,d4,d3,d2,d1 | d6,d5 .....  ──→ 13
c3  a2 →  ....a5,a4,a3,a2 | a1|a6,a5,a4,a3,a2 | a1|a6.......  ──→ 14
d3  b2 →  ....b5,b4,b3,b2 | b1|b6,b5,b4,b3,b2 | b1|b6 .....  ──→ 15
```

**d**

```
a3  d1 →  ....d4,d3,d2,d1 |d6,d5,d4,d3,d2,d1 | d6,d5.......  ──→ 12
b3  a2 →  ....a5,a4,a3,a2,  a1|a6,a5,a4,a3,a2,  a1|a6......  ──→ 13
c3  b2 →  ....b5,b4,b3,b2,  b1|b6,b5,b4,b3,b2,  b1|b6......  ──→ 14
d3  c2 →  ....c5,c4,c3,c2,  c1|c6,c5,c4,c3,c2,  c1|c6......  ──→ 15
```

←──────────────────────────── t

# FIG.3

a  |d6 |c6 |b6 |a6 . . . . . . . . d3,c3,b3,a3,d2,c2,b2,a2,d1| c1 |b1| a1 |

$$\underbrace{\qquad\qquad}_{S(0)}$$

b  |d6 |c6 |b6 |a6 . . . . . . . . d3,c3,b3,a3,d2,c2,b2,a2,d1| c1 |b1| a1 |

$$\underbrace{\qquad\qquad}_{S(20)}\qquad\qquad\underbrace{\qquad\qquad}_{S(2)}$$

c  |d6 |c6 |b6 |a6 . . . . . . . . d3,c3,b3,a3,d2,c2,b2,a2,d1| c1 |b1| a1 |

$$\underbrace{\qquad\qquad}_{S(30)}\qquad\qquad\underbrace{\qquad\qquad}_{S(3)}$$

d  |d6 |c6 |b6 |a6 . . . . . . . . d3,c3,b3,a3,d2,c2,b2,a2,d1| c1 |b1| a1 |

$$\underbrace{\qquad\qquad}_{S(40)}\qquad\qquad\underbrace{\qquad\qquad}_{S(4)}$$

## FIG.4

## FIG.5